# EUROPÄISCHE PATENTSCHRIFT

(11) **EP 0 975 461 B1**
(45) Veröffentlichungstag und Bekanntmachung des Hinweises auf die Patenterteilung: **12.06.2002**
(21) Anmeldenummer: 98912324.5
(22) Anmeldetag: 18.02.1998
(51) Int. Cl.: B29C 65/06, B29C 65/08, F02M 35/10

(54) **KUNSTSTOFFHOHLRAUMSTRUKTUR**
PLASTIC HOLLOW STRUCTURE
STRUCTURE CREUSE EN PLASTIQUE

(30) Priorität: 24.04.1997 DE 19717196
(43) Veröffentlichungstag der Anmeldung: 02.02.2000
(73) Patentinhaber: FILTERWERK MANN & HUMMEL GmbH, 71631 Ludwigsburg (DE)
(72) Erfinder: KLOTZ, Arthur, D-71686 Remseck (DE); MENGELE, Stephan, D-89420 Höchstädt (DE)
(74) Vertreter: Voth, Gerhard, Dipl.-Ing.
(86) Internationale Anmeldenummer: EP9800923
(87) Internationale Veröffentlichungsnummer: WO9847690

(56) Entgegenhaltungen:
- EP-A- 0 146 753
- DE-A- 3 712 275
- DE-A- 19 614 313
- GB-A- 2 067 128
- GB-A- 2 109 680
- GB-A- 2 226 711
- JP-A- 8 334 070
- US-A- 5 575 249

## Beschreibung

Die Erfindung betrifft ein Verfahren zur Herstellung von zusammengesetzten Kunststoff-Hohlraumstrukturen bzw. ein Verfahren zu deren Herstellung.

Derartige Hohlraumstrukturen sind bekannt. Zum Beispiel offenbart die JP-8-334070 eine Kunststoffhohlraumstruktur, die in mehrere Kammern geteilt ist. Diese Kammern werden durch Zwischenwände voneinander getrennt, wobei diese in die einzelnen Gehäuseschalen integriert sind. Daher entstehen im Inneren des Gehäuses Trennfugen, welche abgedichtet werden müssen. Zusätzlich müssen Versteifungen im Gehäuse angebracht werden, um das durch die Zwischenwände entstandene höhere Bauteilgewicht auszugleichen. Daher ist das offenbarte Saugrohr kostenintensiv in der Herstellung und dessen Bauteilgewicht sehr hoch.

Gemäß der US 5 575 249 wird ein Saugrohr offenbart, in das ein Einlegeteil in Saugrohrschalen eingelegt wird. Saugrohrschalen und Einlegeteil weisen miteinander korrespondierende Dichtflächen auf, die miteinander vibrationsverschweißt werden. Dadurch wird das Einlegeteil im Saugrohr fixiert. Allerdings entsteht durch das zusätzliche Einlegeteil ein zusätzlicher Fertigungsaufwand, da dieses Teil hergestellt werden muß. Außerdem muß dieses Teil über die gesamte korrespondierende Dichtfläche mit den Saugrohrschalen verbunden werden, wodurch hohe Schweißkräfte entstehen.

Aufgabe der Erfindung ist es daher, eine Kunststoffhohlraumstruktur zu schaffen, die kostengünstig in der Herstellung ist, ein möglichst geringes Gewicht aufweist und dabei stabil ausgeführt ist.

Erfindungsgemäß wird diese Aufgabe durch ein Verfahren nach Anspruch 6 gelöst.

Hierbei entsteht eine zusammengesetzte Hohlraumstruktur nach Anspruch 1 oder 2, die aus wenigstens zwei Gehäuseteilen mit korrespondierenden Dichtflächen und wenigstens einer Wandhälfte pro Kunststoffgehäuseteil besteht, wobei die Wandhälften zur Verstärkung der Hohlraumstruktur korrespondieren, wobei die korrespondierenden Dichtflächen und die Wandhälften mittels einer Reibkraft verbunden sind.

Anspruch 1 zeigt eine zusammengesetzte Hohlraumstruktur nach der Erfindung.

Eine vorteilhafte Weiterbildung der Erfindung sieht vor, daß in einem Verfahren nach Anspruch 6 die Verbindungskraft durch hohen Druck und/oder hohe Frequenzen, insbesondere im Ultraschallbereich aufgebracht wird.

Nach Anspruch 3 ist vorgesehen, daß die Wandhälften im wesentlichen quer zur Schweißvibrationsrichtung angeordnet sind. Zum einen wird dadurch die Hohlraumstruktur stabiler, zum anderen gelingt es mit dieser Maßnahme labyrinthartige Räume zu erzeugen, die z. B. eine schalldämmende Wirkung haben.

Weiter kann man erfindungsgemäß vorsehen, daß wenigstens eine Wandhälfte wenigstens eine Querrippe aufweist, was insbesondere von Vorteil ist, wenn eine querstehende Wandhälfte mit ihrer korrespondierenden anderen Wandhälfte mittels Vibrationsschweißung als sogenannter Fernschweißung verbunden wird. Die Querrippe verhindert zu große Auslenkungen der Wandhälfte beim Vibrationsschweißen, die die Verschweißung unmöglich machen würde.

Nach Anspruch 1 ist es vorgesehen, daß die Wandhälfte eines Kunststoffgehäuseteiles als domartige Ausbuchtung der Kunststoffgehäusewandung ins Gehäuseinnere ragt. Diese dreidimensionale Ausbildung der Gehäusewandung steigert ebenfalls die Festigkeit, so daß die Wandung in dem zu verschweißenden Bereich nicht durch zu große Auslenkungen die Güte der vorzusehenden Schweißnaht beeinträchtigt oder gar unmöglich macht.

Vorteilhafte Weiterbildungen ergeben sich aus den Unteransprüchen.

Es folgt die Beschreibung der Figuren, es stellen dar:
- Figur 1: eine Draufsicht eines Ausführungsbeispiels,
- Figur 2: einen Schnitt entlang der Linie A - A
- Figur 3: eine Ansicht entlang der Linie B - B
- Figur 4: eine Ansicht entlang der Linie B - B

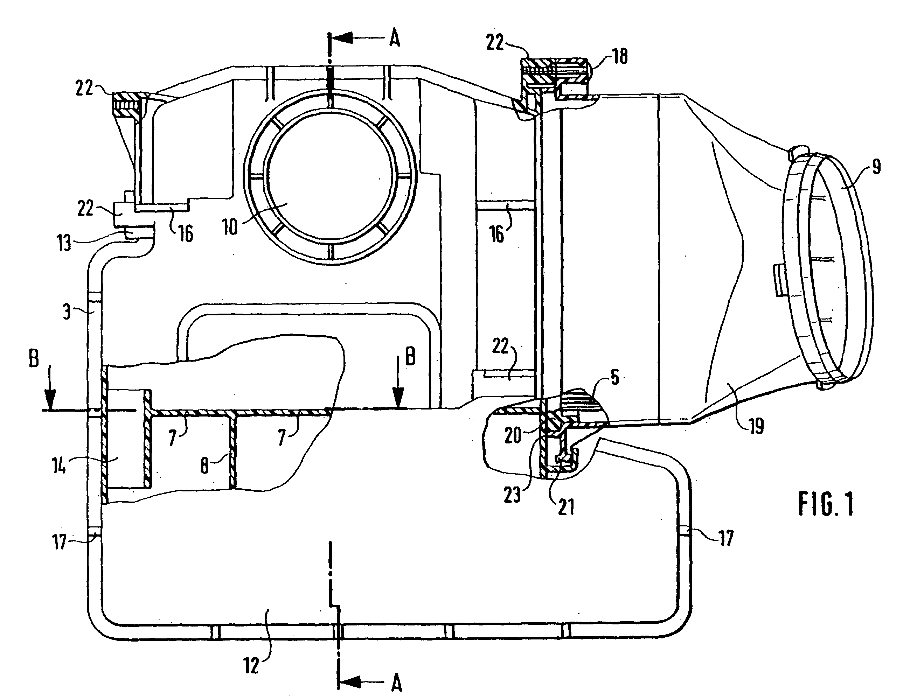

In der Figur 1 ist ein Kunststoffgehäuseteils 3 dargestellt, an dem seitlich ein Filter 5 angeordnet ist, dieses Kunststoffgehäuseteil weist Wandhälften 7 samt rechtwinklig dazu angeordnete Querrippen 8 auf, die das Kunststoffgehäuseteil stabilisieren helfen. Die gesamte in Figur 1 dargestellte Kunststoffhohlraumstruktur verfügt über einen Einlaß 9 und einen mit diesem Einlaß 9 kommunizierenden Auslaß 10. Die Kunststoffhohlraumstruktur ist im wesentlichen in die Bereiche Resonatorraum 12 und Sammelraum 13 unterteilt, wobei vor dem Sammelraum 13 ein Filter 5 angeordnet ist. Der Resonatorraum 12 kommuniziert mittels Verbindungsöffnung 14 mit dem Sammelraum 13.

Am Kunststoffgehäuseteil 3 befinden sich Befestigungsmittel 16, mittels derer, in Verbindung mit in der Figur 1 nicht dargestellten Schrauben, die Kunststoffhohlraumstruktur, die in der abgebildeten Variante als schalldämpfender Luftansaugfilter dient, z.B. im Motorraum eines nicht dargestellten Kraftfahrzeuges.

Zur Erhöhung der Kunststoffgehäusesteifigkeit weist das Kunststoffgehäuseteil 3 sogenannte Vibrationsschweißmitnahme-Versteifungsrippen 17 auf, die insbesondere im Bereich der in dieser Darstellung nicht sichtbaren zweiten Dichtfläche angeordnet sind. Mittels der Schraube 18 wird das Luftfiltergehäuse 19 mit dem Kunststoffgehäuseteil 3 und der dort angeordneten Gewindebuchse 22 verbunden. Im eingebauten Zustand wird das Filter 5 mittels Dichtung 20 an die Dichtfläche 23 des Kunststoffgehäuseteils 3 angepreßt, was von der hebelartig ausgebildeten Gehäusehalterung 21 des Luftfiltergehäuses 19 in Verbindung mit der Gewindebuchse 22 , die ihrerseits die im Luftfiltergehäuse 19 befindliche Schraube 18 aufnimmt, wobei das die Schraube umschließende Gehäuse einen Durchmesser aufweist, der kleiner iat als der Gewindedurchmesser der Schraube 18, so daß eine selbstsichernde Schraubenhalterung entsteht, die Vorzüge bei der De- bzw. Montage aufweist, da die Schraube 18 keinen zusätzlichen Halteaufwand erfordert..

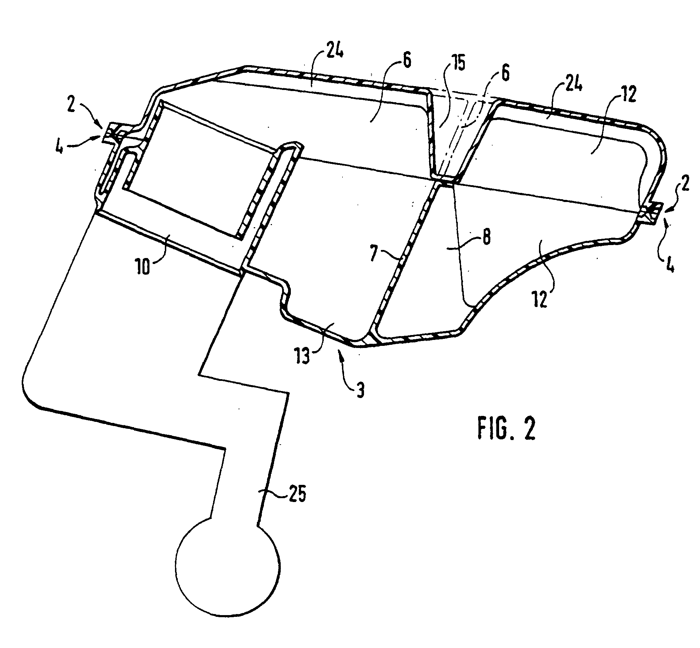

In Figur 2 wird ein Schnitt entlang der Linie A-A aus Figur 1 dargestellt. Das Kunststoffgehäuseteil 1 weist eine ersten Dichtfläche 2 auf; die mit dem korrespondierendem Kunststoffgehäuseteil 3 und der dazugehörenden Dichtfläche 4 die Kunststoffhohlraumstruktur bilden. Der Filter aus Figur 1 ist in dieser Darstellung nicht sichtbar. Die Kunststoffgehäusehälfte 1 weist eine Wandhälfte 6 auf, die ihrerseits mit der Wandhälfte 7 korrespondiert, die dem Kunststoffgehäuseteil 3 entstammt. In der in Figur 2 dargestellten Ausführungsform ist die Kunststoffhohlraumstruktur bereits vibrationsverschweißt, wobei die Querrippen 8 zur Stabilisierung der weit auskragenden Wandhälften 7 dienen, um zu große Auslenkungen der Wandhälften 7 zu verhindern, da die Schweißvibrationsrichtung 11 im wesentlichen rechtwinklig zu den Wandhälften verläuft. Die Wandhälften 6 sind aus dem selben Grund im Kunststoffgehäuseteil 3 zur Steigerung der Festigkeit des Gehäuseteils mittels domartiger Ausbuchtungen 15 verbunden. Diese domartigen Ausbuchtungen ermöglichen ebenfalls ein direkteres Einwirken des Vibrationsschweißwerkzeuges auf die Nahtflächen, wobei der Dombereich eine Schweißung erfährt, die Lasten aufnehmen kann, die Schweißung im Bereich der Wandhälften 6 übernimmt eine Dichtungsfunktion. Der Auslaß 10 ist im Kunststoffgehäuseteil derart untergebracht, daß ein Abstand zur Gehäusewandung besteht, der größer als die Vibrationsamplitude ist, so daß er bei der Vibrationsschweißung nicht mit dem korrespondierendem Kunststoffgehäuseteil 1 in Berührung kommt. Der Auslaß 10 steht in Kontakt zum Anssaugtrakt der nicht dargestellten Brennkraftmaschine und kommuniziert seinerseits wieder mit dem mit dem Resonatorraum 12 kommunizierenden Sammelraum 13 der Kunststoffhohlraumstruktur. Die Verbindung zwischen Sammelraum 13 und Resonatorraum 12 geschieht mittels einer in dieser Darstellung nicht sichtbaren Verbindungsöffnung in der Weise, daß der Resonatorraum 12 als Nebenschlußresonator wirkt. Im Kunststoffgehäuseteil 1 sind zur zusätzlichen Versteifung des Gehäuses Versteifungsrippen 24 angeordnet.

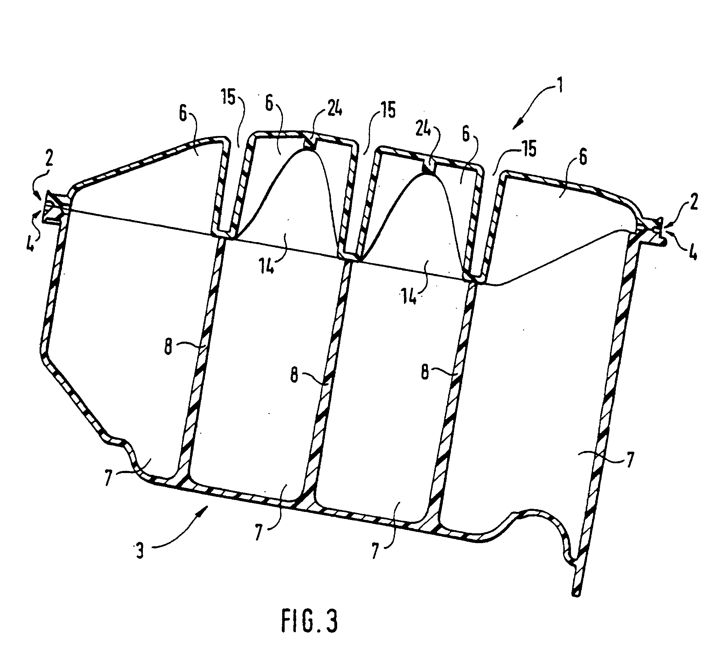

Die Figur 3 stellt einen Schnitt entlang der Linie B - B aus Figur 1 dar. Das Kunststoffgehäuseteil 1 weist eine ersten Dichtfläche 2 auf; die mit dem korrespondierendem Kunststoffgehäuseteil 3 und der dazugehörenden Dichtfläche 4 nach einer Vibrationsschweißung die Kunststoffhohlraumstruktur bilden. Die Kunststoffgehäusehälfte 1 weisen Wandhälften 6 auf, die ihrerseits mit den Wandhälften 7 korrespondieren, die im Kunststoffgehäuseteil 3 befestigt sind. In der in der Figur 3 dargestellten Ausführungsform ist die Kunststoffhohlraumstruktur vibrationsverschweißt, wobei die im Schnitt dargestellten Querrippen 8 zur Stabilisierung der auskragenden Wandhälften 7 dienen, um für die Schweißung funktionsbeinträchtigende Auslenkungen der Wandhälften 7 zu verhindern, da die Schweißvibrationsrichtung im wesentlichen rechtwinklig zu den Wandhälften (6, 7) verläuft. Die Wandhälften 6 sind aus dem selben Grund im Kunststoffgehäuseteil 3 zur Steigerung der Festigkeit des Gehäuseteils mittels domartiger Ausbuchtungen 15 verbunden. Diese domartigen Ausbuchtungen machen ein relativ direktes Einwirken des Vibrationsschweißwerkzeuges auf die Nahtflächen möglich. Der hier nicht sichtbare Resonatorraum kommuniziert mit dem ebenfalls nicht sichtbaren Sammelraum der Kunststoffhohlraumstruktur mittels einer Verbindungsöffnung 14. In der Kunststoffhohlraumstruktur sind Versteifungsrippen 24 angeordnet, die die Verwindungssteifigkeit erhöhen.

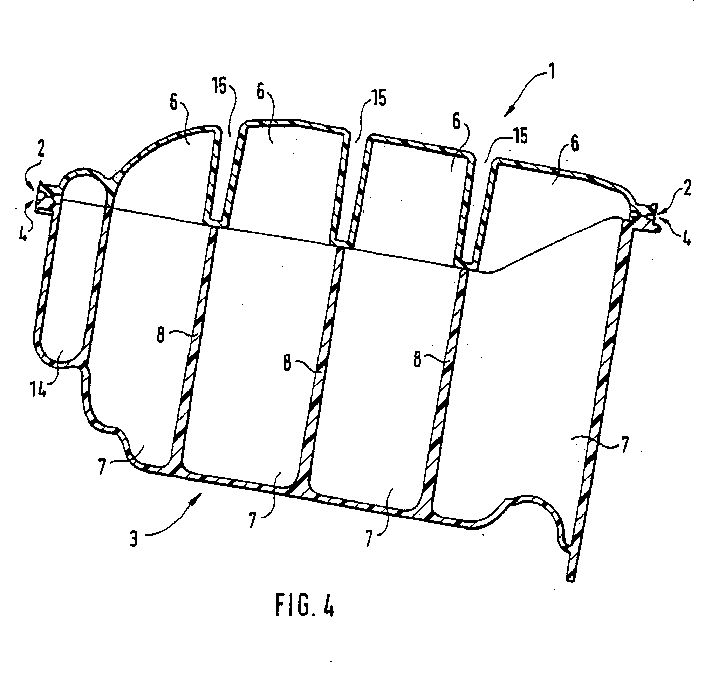

In der Figur 4 wird ein Schnitt entlang der Linie B - B aus Figur 1 gezeigt. Das Kunststoffgehäuseteil 1 weist eine ersten Dichtfläche 2 auf; die mit dem korrespondierendem Kunststoffgehäuseteil 3 und der dazugehörenden Dichtfläche 4 nach einer Vibrationsschweißung die Kunststoffhohlraumstruktur bilden. Die Kunststoffgehäusehälfte 1 weisen Wandhälften 6 auf, die ihrerseits mit den Wandhälften 7 korrespondieren, die im Kunststoffgehäuseteil 3 befestigt sind. In der in der Figur 3 dargestellten Ausführungsform ist die Kunststoffhohlraumstruktur vibrationsverschweißt, wobei die im Schnitt dargestellten Querrippen 8 zur Stabilisierung der auskragenden Wandhälften 7 dienen, um für die Schweißung schädliche Auslenkungen der Wandhälften 7 zu verhindern, da die Schweißvibrationsrichtung rechtwinklig zu den Wandhälften (6, 7) verläuft. Die Wandhälften 6 sind im Kunststoffgehäuseteil 3 zur Steigerung der Festigkeit des Gehäuseteils mittels domartiger Ausbuchtungen 15 verbunden. Diese domartigen Ausbuchtungen ermöglichen ein direktes Einwirken des Vibrationsschweißwerkzeuges auf die Nahtflächen. Der nicht sichtbare Resonatorraum kommuniziert mit dem nicht sichtbaren Sammelraum der Kunststoffhohlraumstruktur mittels einer Verbindungsöffnung 14, die in dieser Ausführungsform in Form eines eigenständigen Rohrquerschnitts, der sich aus den Kunststoffgehäusehälften (1, 3) nach dem Verschweißen herausbildet, entsteht. In der Kunststoffhohlraumstruktur sind Versteifungsrippen 24 zur Steigerung der Festigkeit angeordnet.

## Patentansprüche

1. Zusammengesetzte Hohlraumstruktur, die aus wenigstens zwei Gehäuseteilen (1, 3) mit korrespondierenden Dichtflächen (2, 4) und wenigstens einer Wandhälfte pro Kunststoffgehäuseteil besteht, wobei die Wandhälften zur Verstärkung der Hohlraumstruktur korrespondieren, wobei die die korrespondierenden Dichtflächen (2, 4) und die Wandhälften (6, 7) mittels einer Reibkraft verbunden sind, **dadurch gekennzeichnet, daß** wenigstens eine Wandhälfte (6) eines Kunststoffgehäuseteiles (1) zur Steigerung der Festigkeit des Gehäuseteils als domartige Ausbuchtung (15) der Kunststoffgehäuseteilwandung ins Gehäuseinnere ragt.

2. Zusammengesetzte Hohlraumstruktur, die aus wenigstens zwei Gehäuseteilen (1, 3) mit korrespondierenden Dichtflächen (2, 4) und wenigstens einer Wandhälfte pro Kunststoffgehäuseteil besteht, wobei die Wandhälften zur Verstärkung der Hohlraumstruktur korrespondieren, wobei die die korrespondierenden Dichtflächen (2, 4) und die Wandhälften (6, 7) mittels einer Reibkraft verbunden sind, **dadurch gekennzeichnet, daß** die Wandhälfte eines Kunststoffgehäuseteiles (3) als Quersteg (7) der Kunststoffgehäuseteilwandung ins Gehäuseinnere ragt und wenigstens ein Quersteg (7) wenigstens eine Querrippe (8) zur Stabilisierung aufweist.

3. Zusammengesetzte Hohlraumstruktur nach einem der vorherigen Ansprüche, **dadurch gekennzeichnet, daß** die Wandhälften (6, 7) im wesentlichen quer zur Schweißvibrationsrichtung (11) angeordnet sind.

4. Zusammengesetzte Hohlraumstruktur nach einem der vorherigen Ansprüche , umfassend einen Ein- (9) und einen Auslaß (10), **dadurch gekennzeichnet, daß** die Wandhälften zur Erzeugung eines im Gehäuseinneren liegenden Resonatorraums korrespondieren, wobei die korrespondierenden Dichtflächen (2,4) und die Wandhälften (6,7) mittels einer Reibkraft verbunden sind und der Einlaß (9), der Resonatorraum (12) und der Auslaß (10) miteinander kommunizieren.

5. Luftansaugfilter für eine Brennkraftmaschine (25) mit Schalldämpfung vor und/oder hinter einem Filter (5), **dadurch gekennzeichnet, daß** eine zusammengesetzte Hohlraumstruktur nach Anspruch 4 zum Einsatz kommt, wobei die Schalldämfung durch den Resonatorraum (12) realisiert ist.

6. Verfahren zur Herstellung von zusammengesetzten Kunststoff-Hohlraumstrukturen gemäß einem der vorherigen Ansprüche aus wenigstens zwei Kunststoffgehäuse-Einzelteilen mit korrespondierenden Dicht- (2, 4) und Wandflächen (6, 7) zur Erzeugung von stabilen Hohlraumstrukturen, wobei das Verfahren folgende Schritte umfaßt: Schaffung eines ersten Kunststoffgehäuseteils (1) mit einer ersten Dichtfläche (2) und wenigstens einer ersten Wandhälfte, Schaffung eines zweiten Kunststoffgehäuseteils (3) mit einer zweiten Dichtfläche (4) und wenigstens einer zweiten Wandhälfte, Anbringung des ersten Kunststoffgehäuseteils (1) in einem ersten Werkzeug oder einer Lehre, welches das erste Kunststoffgehäuseteil (1) in der Umgebung der ersten Dichtfläche (2) unterstützt, Anbringung des zweiten Kunststoffgehäuseteils (3) in einem zweiten Werkzeug oder einer Lehre, welches das zweite Kunststoffgehäuseteil (3) in der Umgebung der zweiten Dichtfläche (4) unterstützt, Ausrichten der Teile mit den korrespondierenden Dichtflächen, so daß die korrespondierenden Dichtflächen sowie die wenigstens eine erste Wandhälfte (6) des ersten Kunststoffgehäuseteils (1) und die wenigstens eine zweite Wandhälfte (7) des zweiten Kunststoffgehäuseteils (3) miteinander in Kontakt kommen, Aufbringung einer Verbindungskraft auf die gesamten Dichtflächen, wobei wenigstens eines der Werkzeuge oder Lehren relativ zum anderen Werkzeug bewegt wird, um so eine Reibkraft zum Verbinden der Einzelteile zu erzeugen.

7. Verfahren nach Anspruch 6 **dadurch gekennzeichnet, daß** die Verbindungskraft durch Relativbewegungen und/oder hohe Frequenzen, insbesondere im Ultraschallbereich aufgebracht wird.

## Claims

1. Composite hollow structure, which comprises at least two housing portions (1, 3) with corresponding sealing faces (2, 4) and at least one wall half per plastics material housing portion, the wall halves corresponding with each other to reinforce the hollow structure, and the corresponding sealing faces (2, 4) and the wall halves (6, 7) being joined by means of a frictional force, **characterised in that** at least one wall half (6) of one plastics material housing portion (1) protrudes into the housing interior as a dome-shaped bulge (15) of the plastics material housing portion wall in order to increase the strength of the housing portion.

2. Composite hollow structure, which comprises at least two housing portions (1, 3) with corresponding sealing faces (2, 4) and at least one wall half per plastics material housing portion, the wall halves corresponding with each other to reinforce the hollow structure, and the corresponding sealing faces (2, 4) and the wall halves (6, 7) being joined by means of a frictional force, **characterised in that** the wall half of one plastics material housing portion (3) protrudes into the housing interior as a transverse web (7) of the plastics material housing portion wall, and at least one transverse web (7) has at least one transverse rib (8) for stabilisation purposes.

3. Composite hollow structure according to one of the previous claims, **characterised in that** the wall halves (6, 7) are disposed substantially transversely relative to the direction (11) of heat-sealing vibration.

4. Composite hollow structure according to one of the previous claims, including an inlet (9) and an outlet (10), **characterised in that** the wall halves correspond with each other to produce a resonator chamber situated in the housing interior, the corresponding sealing faces (2, 4) and the wall halves (6, 7) being joined by means of a frictional force, and the inlet (9), the resonator chamber (12) and the outlet (10) communicating with one another.

5. Air intake filter for an internal combustion engine (25), having sound absorption upstream of and/or downstream of a filter (5), **characterised in that** a composite hollow structure according to claim 4 is used, the sound being absorbed by the resonator chamber (12).

6. Method of producing composite plastics material hollow structures according to one of the previous claims from at least two individual plastics material housing portions with corresponding sealing faces (2, 4) and wall faces (6, 7) for producing stable hollow structures, the method including the following steps: providing a first plastics material housing portion (1) with a first sealing face (2) and at least one first wall half; providing a second plastics material housing portion (3) with a second sealing face (4) and at least one second wall half; mounting the first plastics material housing portion (1) in a first tool or in a jig which supports the first plastics material housing portion (1) in the vicinity of the first sealing face (2); mounting the second plastics material housing portion (3) in a second tool or in a jig, which supports the second plastics material housing portion (3) in the vicinity of the second sealing face (4); aligning the portions with the corresponding sealing faces so that the corresponding sealing faces as well as at least one first wall half (6) of the first plastics material housing portion (1) and at least one second wall half (7) of the second plastics material housing portion (3) come into contact with one another; and applying a joining force to all of the sealing faces, at least one of the tools or jigs being moved relative to the other tool so as to generate a frictional force to join the individual component parts.

7. Method according to claim 6, **characterised in that** the joining force is applied by relative movements and/or by high frequencies, more especially in the ultrasonic range.

## Revendications

1. Structure creuse entièrement assemblée, composée au moins de deux parties de carter (1, 3) avec des surfaces d'étanchéité (2, 4) qui se correspondent et au moins une demi-paroi par partie de carter en matière plastique, les demi-parois correspondant au renforcement de la structure creuse, et les surfaces d'étanchéité (2, 4) correspondantes et les demi-parois (6, 7) étant maintenues en contact sous l'effet d'une force de frottement,
**caractérisée en ce qu'**
une au moins, des demi-parois (6) d'une partie du carter en pastique (1) dépasse de la demi-partie du carter en plastique pour renforcer la rigidité de la partie de carter, sous forme d'un renfoncement (15) en forme de dôme.

2. Structure creuse entièrement assemblée, composée au moins de deux parties de carter (1, 3) avec des surfaces d'étanchéité (2, 4) qui se correspondent et au moins une demi-paroi par partie de carter en matière plastique, les demi-parois correspondant au renforcement de la structure creuse, et les surfaces d'étanchéité (2, 4) correspondantes et les demi-parois (6, 7) étant maintenues en contact sous l'effet d'une force de frottement,
**caractérisée en ce que**
la demi-paroi d'une partie de carter en plastique (3) pénètre dans l'intérieur du carter en tant que traverse (7) de la partie de paroi en plastique, et au moins une traverse (7) comporte au moins une nervure transversale (8) de stabilisation.

3. Structure creuse assemblée selon l'une des revendications précédentes,
**caractérisée en ce que**
les demi-parois (6, 7) sont disposées pratiquement perpendiculaires à la direction des vibrations des soudures (11).

4. Structure creuse assemblée selon l'une des revendications précédentes, comprenant un orifice d'admission (9), et un orifice d'échappement (10),
**caractérisée en ce que**
les demi-parois correspondent à l'établissement d'un volume résonnant à l'intérieur du carter, les surfaces d'étanchéité (2, 4) et les demi-parois (6, 7) étant reliées sous l'effet d'une force de frottement, et l'orifice d'admission (9), le volume résonant (12) et l'orifice de sortie (10) communiquant entre eux.

5. Filtre d'admission d'air pour une machine à combustion interne (25) avec amortisseur de son devant et derrière un filtre (5),
**caractérisé en ce qu'**
il comporte une structure creuse assemblée selon la revendication 4, l'amortissement du son étant obtenu par le volume résonant (12).

6. Procédé d'élaboration d'une structure creuse en matière plastique, assemblée, selon l'une quelconque des revendications précédentes, composée d'au moins deux pièces unitaires de carter avec leurs surfaces d'étanchéité (2, 4) et leurs parois (6, 7) dans le but d'obtenir des structures creuses, stables
**caractérisé par**
les étapes suivantes :
- formation d'une première partie du carter en plastique (1) avec une première surface d'étanchéité (2) et au moins une première demi-paroi,
- formation d'une deuxième partie de carter en plastique (3) avec une deuxième surface d'étanchéité (4) et au moins une deuxième demi-paroi,
- introduction de la première partie du carter (1) dans un premier outil ou gabarit, servant à soutenir cette première partie de carter (1) dans l'environnement de la première surface d'étanchéité (2),
- introduction de la deuxième partie de carter (3) dans un deuxième outil ou gabarit, servant à soutenir cette deuxième partie de carter (3) dans l'environnement de la deuxième surface d'étanchéité (4),
- assemblage de ces pièces avec les surfaces d'étanchéité correspondantes, de façon à mettre en contact au moins la première demi-paroi (6) de la première partie du carter (1) avec au moins la deuxième demi-paroi (7) de la deuxième partie du carter (3), et
- application sur l'ensemble des surfaces d'étanchéité, d'une force de liaison, l'un au moins des outils ou gabarits pouvant se déplacer par rapport à l'autre outil, pour établir de cette façon, une force de frottement entre les différentes pièces.

7. Procédé selon la revendication 6,
**caractérisé en ce que**
la force de liaison est appliquée par un mouvement relatif, et/ou par haute fréquence, et en particulier dans la plage des ultrasons.
